# EUROPEAN PATENT APPLICATION

(11) **EP 4 640 736 A1**
(43) Date of publication of application: **29.10.2025**
(21) Application number: 23906713.5
(22) Date of filing: 05.12.2023
(51) Int. Cl.: C08G 61/08, B60C 1/00, C08L 21/00, C08L 65/00

(54) **RING-OPENED COPOLYMER, RUBBER COMPOSITION, RUBBER CROSS-LINKED PRODUCT, AND TIRE**

(30) Priority: 21.12.2022 JP 2022204188
(71) Applicant: Zeon Corporation, Tokyo 100-8246 (JP)
(72) Inventor: ISOBE, Kousuke, Tokyo 100-8246 (JP); SAKURAI, Takuro, Tokyo 100-8246 (JP)
(74) Representative: Maiwald GmbH
(86) International application number: PCT/JP2023/043511
(87) International publication number: WO 2024/135347

(57) **Abstract**

Provided is a ring-opened copolymer that can give a cross-linked rubber having a good balance of excellent mechanical strength, excellent wet grip properties, and low heat build-up. Provided is a ring-opened copolymer comprising a structural unit derived from cyclooctene and a structural unit derived from a norbornene compound with three or more rings.

## Description

### TECHNICAL FIELD

The present invention relates to a ring-opened copolymer, a rubber composition, a cross-linked rubber, and a tire.

### BACKGROUND ART

It is generally known that ring-opening metathesis polymerization of cyclopentene and a norbornene compound in the presence of a so-called Ziegler-Natta catalyst consisting of a compound with a transition metal of Group 6 of the periodic table, such as WCl₆ or MoCl₅, and an organic metal activator, such as triisobutylaluminium, diethylaluminium chloride, or tetrabutyltin, affords an unsaturated linear ring-opened copolymer.

For example, Patent Document 1 discloses a ring-opened copolymer comprising structural units derived from a norbornene compound represented by General Formula (1) defined therein and structural units derived from a monocyclic olefin, wherein relative to the total repeating structural units in the ring-opened copolymer, the proportion of the structural units derived from a norbornene compound is 25 to 90% by weight, and the proportion of the structural units derived from a monocyclic olefin is 10 to 75% by weight, the weight average molecular weight of the ring-opened copolymer is 100,000 to 1,000,000, and the cis/trans ratio of the ring-opened copolymer is 0/100 to 50/50. According to the techniques disclosed in Patent Document 1, a cross-linked rubber excellent in all of mechanical strength, elongation properties, and rebound resilience can be provided.

### RELATED ART DOCUMENT

### PATENT DOCUMENT

Patent Document 1: WO 2019/208239

### SUMMARY OF THE INVENTION

### PROBLEM TO BE SOLVED BY THE INVENTION

When a ring-opened copolymer is used as a material for tire applications, the ring-opened copolymer is required to achieve a good balance of performance properties needed for tires including heat build-up. However, in Patent Document 1, there is no study on such performance properties including low heat build-up.

In view of the above issue, the present invention is aimed at providing a ring-opened copolymer that can give a cross-linked rubber having a good balance of excellent mechanical strength, excellent wet grip properties, and low heat build-up.

### MEANS FOR SOLVING THE PROBLEM

As a result of intensive studies to achieve the above object, the present inventors have found that the above object can be achieved by a ring-opened copolymer comprising a structural unit derived from cyclooctene and a structural unit derived from a norbornene compound with three or more rings, and have completed the present invention.

Specifically, the present invention provides a ring-opened copolymer, a rubber composition, a cross-linked rubber, and a tire as described below.
[1] A ring-opened copolymer comprising a structural unit derived from cyclooctene and a structural unit derived from a norbornene compound with three or more rings.
[2] The ring-opened copolymer according to [1], wherein relative to the total repeating structural units in the ring-opened copolymer, the proportion of the structural unit derived from cyclooctene is 10 to 95% by weight, and the proportion of the structural unit derived from a norbornene compound with three or more rings is 5 to 90% by weight.
[3] The ring-opened copolymer according to [1] or [2], wherein the norbornene compound with three or more rings is a norbornene compound having 3 to 6 ring structures.
[4] The ring-opened copolymer according to any one of [1] to [3], wherein the norbornene compound with three or more rings is at least one of a compound represented by General Formula (1) below and a compound represented by General Formula (2) below: 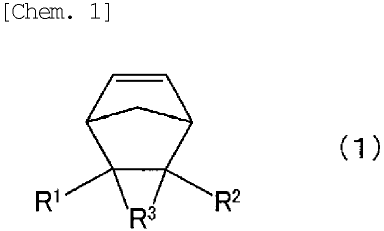 where in General Formula (1) above, R¹ and R² each independently represent a hydrogen atom; a halogen atom; an optionally substituted hydrocarbon group having 1 to 20 carbon atoms; or a substituent containing a silicon atom, an oxygen atom, or a nitrogen atom; R¹ and R² may be bonded to each other to form a ring; and R³ represents an optionally substituted divalent hydrocarbon group having 1 to 20 carbon atoms; 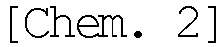 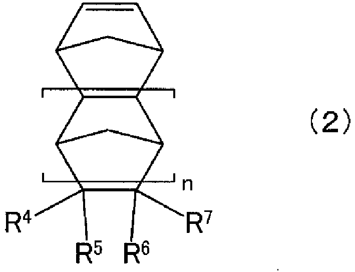 where in General Formula (2) above, R⁴ to R⁷ each independently represent a hydrogen atom; a halogen atom; an optionally substituted hydrocarbon group having 1 to 20 carbon atoms; or a substituent containing a silicon atom, an oxygen atom, or a nitrogen atom; R⁴ and R⁶ may be bonded to each other to form a ring, or at least one pair of R⁴ and R⁵, and R⁶ and R⁷ may be bonded to each other to form a ring; and n is 1 or 2.
[5] The ring-opened copolymer according to any one of [1] to [4], wherein the ring-opened copolymer has a weight average molecular weight (Mw) of 10,000 to 1,000,000, a cis/trans ratio of 90/10 to 5/95, and a glass transition temperature (Tg) of -100 to 20°C.
[6] A rubber composition comprising the ring-opened copolymer according to any one of [1] to [5].
[7] The rubber composition according to [6], further comprising a filler.
[8] The rubber composition according to [6] or [7], further comprising a cross-linking agent.
[9] A cross-linked rubber obtained by cross-linking the rubber composition according to any one of [6] to [8].
[10] A tire comprising the cross-linked rubber according to [9].

### EFFECTS OF THE INVENTION

The present invention can provide a ring-opened copolymer that can provide a cross-linked rubber having a better balance of excellent mechanical strength, excellent wet grip properties, and low heat build-up.

### DESCRIPTION OF EMBODIMENTS

### <Ring-opened copolymer>

The ring-opened copolymer according to the present invention is a ring-opened copolymer comprising a structural unit derived from cyclooctene and a structural unit derived from a norbornene compound with three or more rings obtained by copolymerizing cyclooctene and a norbornene compound with three or more rings.

The norbornene compound with three or more rings used in the present invention is not particularly limited as long as it is a compound having 3 or more ring structures including a norbornene ring, but is a compound preferably having 3 to 6 ring structures, and more preferably having 3 to 4 ring structures. In the present invention, the norbornene compound with three or more rings may be used alone or in combination.

The norbornene compound with three or more rings refers to a compound containing a norbornene ring and rings fused to the norbornene ring. Examples thereof include a norbornene compound having a heterocyclic ring fused to a norbornene ring and a norbornene compound having a fused ring containing a norbornene ring and a hydrocarbon ring fused to the norbornene ring. Among these, a norbornene compound having a fused ring containing a norbornene ring and a hydrocarbon ring fused to the norbornene ring is preferred because the effect of the present invention can be more prominent.

Examples of the norbornene compound having a heterocyclic ring fused to a norbornene ring include norbornene-5,6-dicarboxylic acid anhydride, norbornene-5,6-dicarboxylic acid imide, and the like.

Examples of the norbornene compound having a fused ring containing a norbornene ring and a hydrocarbon ring fused to the norbornene ring include a compound represented by General Formula (1) below (excluding the compound represented by General Formula (2) below) or a compound represented by General Formula (2) below: 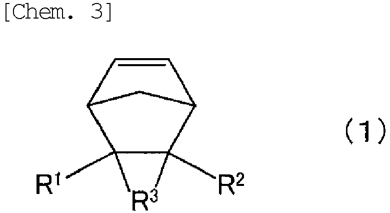 where in General Formula (1) above, R¹ and R² each independently represent a hydrogen atom, a halogen atom, an optionally substituted hydrocarbon group having 1 to 20 carbon atoms, or a substituent containing a silicon atom, an oxygen atom, or a nitrogen atom; R¹ and R² may be bonded to each other to form a ring; and R³ represents an optionally substituted divalent hydrocarbon group having 1 to 20 carbon atoms; 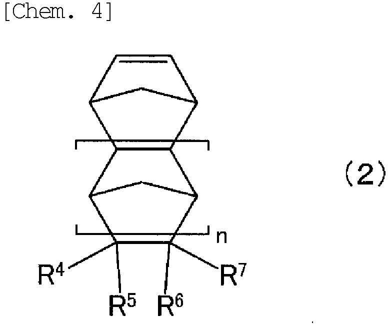 where in General Formula (2) above, R⁴ to R⁷ each independently represent a hydrogen atom, a halogen atom, an optionally substituted hydrocarbon group having 1 to 20 carbon atoms, or a substituent containing a silicon atom, an oxygen atom, or a nitrogen atom; R⁴ and R⁶ may be bonded to each other to form a ring, or R⁴ and R⁵ and/or R⁶ and R⁷ may be bonded to each other to form a ring; and n is 1 or 2.

In General Formula (1) above, R¹ and R² each independently represent a hydrogen atom; a halogen atom; an optionally substituted hydrocarbon group having 1 to 20 carbon atoms; or a substituent containing a silicon atom, an oxygen atom, or a nitrogen atom. R¹ and R² may be the same or different.

Examples of the hydrocarbon group having 1 to 20 carbon atoms as an example of R¹ and R² include alkyl groups having 1 to 20 carbon atoms, such as a methyl group, an ethyl group, an n-propyl group, an isopropyl group, an n-butyl group, an isobutyl group, a sec-butyl group, and a tert-butyl group; alkenyl groups having 2 to 20 carbon atoms, such as a vinyl group and an allyl group; alkynyl groups having 2 to 20 carbon atoms, such as an ethynyl group and a propynyl group; and the like. The hydrocarbon group having 1 to 20 carbon atoms may be, for example, linear or branched.

The hydrocarbon group having 1 to 20 carbon atoms as an example of R¹ and R² may be substituted or unsubstituted. Examples of the substituent include substituents other than hydrocarbon groups, such as carbonyl group-containing groups such as a carboxyl group, acid anhydride groups, hydrocarbylcarbonyl groups, alkoxycarbonyl groups, and acyloxy groups; an epoxy group; an oxy group; a cyano group; an amino group; halogen groups; and the like.

Examples of the substituent containing a silicon atom, an oxygen atom, or a nitrogen atom as an example of R¹ and R² include alkoxysilyl groups; carbonyl group-containing groups, such as a carboxyl group, acid anhydride groups, hydrocarbylcarbonyl groups, alkoxycarbonyl groups, and acyloxy groups; an epoxy group; an oxy group; a cyano group; an amino group; and the like.

In General Formula (1) above, R¹ and R² may be bonded to each other to form a ring, or R¹ and R² may not be bonded to each other.

R¹ and R² are each independently preferably a hydrogen atom and a hydrocarbon having 1 to 20 carbon atoms, more preferably a hydrogen atom and a hydrocarbon having 1 to 10 carbon atoms, still more preferably a hydrogen atom.

In General Formula (1) above, R³ represents an optionally substituted divalent hydrocarbon group having 1 to 20 carbon atoms. Examples of the divalent hydrocarbon group having 1 to 20 carbon atoms include alkylene groups having 1 to 20 carbon atoms, alkenylene groups having 2 to 20 carbon atoms, cycloalkylene groups having 3 to 20 carbon atoms, cycloalkylalkylene groups having 4 to 20 carbon atoms, arylene groups having 6 to 20 carbon atoms, aralkylene groups having 7 to 20 carbon atoms, and the like. The alkylene groups and the alkenylene groups may be linear or branched. The cycloalkylene groups, the cycloalkylalkylene groups, the arylene groups, and the aralkylene groups may have a substituent, such as a lower alkyl group, on the ring thereof.

The divalent hydrocarbon group having 1 to 20 carbon atoms as R³ may be substituted or unsubstituted. Examples of the substituent include substituents other than hydrocarbon groups, such as carbonyl group-containing groups such as a carboxyl group, acid anhydride groups, hydrocarbylcarbonyl groups, alkoxycarbonyl groups, and acyloxy groups; an epoxy group; an oxy group; a cyano group; an amino group; halogen groups; and the like.

The number of carbon atoms in R³ is not particularly limited as long as it is 1 to 20, but is preferably 2 to 15, more preferably 3 to 10.

R³ is preferably an alkenylene group having 2 to 20 carbon atoms and an aralkylene group having 7 to 20 carbon atoms, more preferably an alkenylene group having 2 to 10 carbon atoms.

Specific examples of the compound represented by General Formula (1) above include hydrocarbon ring-fused bicyclo[2.2.1]hept-2-enes, such as dicyclopentadiene, methyldicyclopentadiene, tricyclo [5.2.1.0^{2,6}]dec-8-ene, tetracyclo [9.2.1.0^{2,10}.0^{3,8}]tetradeca-3,5,7,12-tetraene (also called 1,4-methano-1,4,4a,9a-tetrahydro-9H-fluorene), tetracyclo [10.2.1.0^{2,11}.0^{4,9}]pentadeca-4,6,8,13-tetraene (also called 1,4-methano-1,4,4a,9,9a,10-hexahydroanthracene), and the like.

In General Formula (2) above, R⁴ to R⁷ each independently represent a hydrogen atom, a halogen atom, an optionally substituted hydrocarbon group having 1 to 20 carbon atoms, or a substituent containing a silicon atom, an oxygen atom, or a nitrogen atom. R⁴ to R⁷ may be the same or different.

Examples of the optionally substituted hydrocarbon group having 1 to 20 carbon atoms as an example of R⁴ to R⁷ include the same groups as those enumerated as the optionally substituted hydrocarbon group having 1 to 20 carbon atoms as an example of R¹ and R².

In General Formula (2) above, R⁴ and R⁶ may be bonded to each other to form a ring, or R⁴ and R⁶ may not be bonded to each other. At least one pair of R⁴ and R⁵, and R⁶ and R⁷ may be bonded to each other to form a ring, or both pairs of R⁴ and R⁵, and R⁶ and R⁷ may not be bonded to each other.

R⁴ to R⁷ are each independently preferably a hydrogen atom and a hydrocarbon having 1 to 20 carbon atoms, more preferably a hydrogen atom and a hydrocarbon having 1 to 10 carbon atoms, still more preferably a hydrogen atom.

In General Formula (2) above, n is 1 or 2, preferably 1.

Specific examples of the compound represented by General Formula (2) above include tetracyclo[6.2.1.1^{3,6}.0^{2,7}]dodec-4-enes having no substituent or having a hydrocarbon substituent, such as tetracyclo [6.2.1.1^{3,6}.0^{2,7}]dodec-4-ene, 9-methyltetracyclo[6.2.1.1^{3,6}.0^{2,7}] dodec-4-ene, 9-ethyltetracyclo[6.2.1.1^{3,6}.0^{2,7}] dodec-4-ene, 9-cyclohexyltetracyclo[6.2.1.1^{3,6}.0^{2,7}]dodec-4-ene, 9-cyclopentyltetracyclo [6.2.1.1^{3,6}.0^{2,7}]dodec-4-ene, 9-methylenetetracyclo [6.2.1.1^{3,6}.0^{2,7}]dodec-4-ene, 9-ethylidenetetracyclo [6.2.1.1^{3,6}.0^{2,7}] dodec-4-ene, 9-vinyltetracyclo [6.2.1.1^{3,6}.0^{2,7}]dodec-4-ene, 9-propenyltetracyclo[6.2.1.1^{3,6}.0^{2,7}]dodec-4-ene, 9-cyclohexenyltetracyclo[6.2.1.1^{3,6}.0^{2,7}]dodec-4-ene, 9-cyclopentenyltetracyclo [6.2.1.1^{3,6}.0^{2,7}]dodec-4-ene, and 9-phenyltetracyclo[6.2.1.1^{3,6}.0^{2,7}]dodec-4-ene;
tetracyclo [6.2.1.1^{3,6}.0^{2,7}]dodec-4-enes having an alkoxycarbonyl group, such as methyl tetracyclo [6.2.1.1^{3,6}.0^{2,7}]dodec-9-ene-4-carboxylate, and methyl 4-methyltetracyclo [6.2.1.1^{3,6}.0^{2,7}] dodec-9-ene-4-carboxylate;
tetracyclo [6.2.1.1^{3,6}.0^{2,7}]dodec-4-enes having a hydroxycarbonyl group or an acid anhydride group, such as tetracyclo [6.2.1.1^{3,6}.0^{2,7}]dodec-9-ene-4-carboxylic acid, tetracyclo [6.2 .1.1^{3,6}.0^{2,7}]dodec-9-ene-4,5-dicarboxylic acid, and tetracyclo [6.2.1.1^{3,6}.0^{2,7}]dodec-9-ene-4, 5-dicarboxylic anhydride;
tetracyclo[6.2.1.1^{3,6}.0^{2,7}]dodec-4-enes having a hydroxyl group, such as tetracyclo[6.2.1.1^{3,6}.0^{2,7}]dodec-9-ene-4-methanol and tetracyclo[6.2.1.1^{3,6}.0^{2,7}]dodec-4-ene-9-ol;
tetracyclo [6.2.1.1^{3,6}.0^{2,7}]dodec-4-enes having a hydrocarbonyl group, such as tetracyclo [6.2.1.1^{3,6}.0^{2,7}]dodec-9-ene-4-carbaldehyde;
tetracyclo [6.2.1.1^{3,6}.0^{2,7}]dodec-4-enes having a carbonyloxy group, such as 9-tetracyclo [6.2.1.1^{3,6}.0^{2,7}]dodec-4-enyl acetate, 9-tetracyclo [6.2.1.1^{3,6}.0^{2,7}]dodec-4-enyl acrylate, and 9-tetracyclo [6.2.1.1^{3,6}.0^{2,7}]dodec-4-enyl methacrylate;
tetracyclo[6.2.1.1^{3,6}.0^{2,7}]dodec-4-enes having a functional group containing a nitrogen atom, such as tetracyclo[6.2.1.1^{3,6}.0^{2,7}]dodec-9-ene-4-carbonitrile, tetracyclo [6.2.1.1^{3,6}.0^{2,7}]dodec-9-ene-4-carboxamide, and tetracyclo [6.2 .1.1^{3,6}.0^{2,7}]dodec-9-ene-4, 5-dicarboxylic acid imide;
tetracyclo[6.2.1.1^{3,6}.0^{2,7}]dodec-4-enes having a halogen atom, such as 9-chlorotetracyclo[6.2.1.1^{3,6}.0^{2,7}]dodec-4-ene;
tetracyclo[6.2.1.1^{3,6}.0^{2,7}]dodec-4-enes having a functional group containing a silicon atom, such as 4-trimethoxysilyltetracyclo[6.2.1.1^{3,6}.0^{2,7}]dodec-4-ene and 4-triethoxysilyltetracyclo[6.2.1.1^{3,6}.0^{2,7}]dodec-4-ene.

The norbornene compounds with three or more rings may be used alone or in combination. As the norbornene compound with three or more rings, the compound represented by General Formula (1) above and tetracyclo[6.2.1.1^{3,6}.0^{2,7}]dodec-4-enes having no substituent or having a hydrocarbon substituent are preferred, and dicyclopentadiene, 1,4-methano-1,4,4a,9a-tetrahydro-9H-fluorene, and tetracyclo [6.2.1.1^{3,6}.0^{2,7}]dodec-4-ene are more preferred because the effect of the present invention can be more prominent. Dicyclopentadiene and tetracyclo[6.2.1.1^{3,6}.0^{2,7}]dodec-4-enes having no substituents or having a hydrocarbon substituent are preferred because a cross-linked rubber having good abrasion resistance and also having far superior mechanical strength and lower heat build-up can be provided. The compound represented by General Formula (1) above is preferred because a cross-linked rubber having far superior wet grip properties can be provided.

In the ring-opened copolymer according to the present invention, the proportion of the structural unit derived from cyclooctene relative to the total repeating structural units is preferably 10 to 95% by weight. From the viewpoint of capability of providing a cross-linked rubber having excellent abrasion resistance and lower heat build-up, the proportion of the structural unit derived from cyclooctene relative to the total repeating structural units is preferably 15% by weight or more, more preferably 40% by weight or more, still more preferably 55% by weight or more. From the viewpoint of capability of providing a cross-linked rubber having a better balance of abrasion resistance and mechanical strength, the proportion is preferably 10 to 95% by weight, more preferably 25 to 90% by weight. From the viewpoint of capability of providing a cross-linked rubber having a better balance of excellent wet grip properties, low heat build-up, and excellent abrasion resistance, the proportion is preferably 40 to 85% by weight, more preferably 55 to 85% by weight.

In the ring-opened copolymer according to the present invention, the proportion of the structural unit derived from a norbornene compound with three or more rings relative to the total repeating structural units is preferably 5 to 90% by weight. From the viewpoint of capability of providing a cross-linked rubber having excellent abrasion resistance and lower heat build-up, the proportion of the structural unit derived from a norbornene compound with three or more rings relative to the total repeating structural units is preferably 85% by weight or less, more preferably 60% by weight or less, still more preferably 45% by weight or less. From the viewpoint of capability of providing a cross-linked rubber having a better balance of abrasion resistance and mechanical strength, the proportion is preferably 5 to 90% by weight, more preferably 10 to 75% by weight. From the viewpoint of capability of providing a cross-linked rubber having a better balance of excellent wet grip properties, low heat build-up, and excellent abrasion resistance, the proportion is preferably 15 to 60% by weight, more preferably 15 to 45% by weight.

The ring-opened copolymer according to the present invention may be a copolymer obtained by copolymerization of cyclooctene and the norbornene compound with three or more rings with additional monomers copolymerizable with these compounds. Examples of such additional monomers include monocyclic olefins other than cyclooctene, monocyclic dienes, monocyclic trienes, and the like. Examples of the monocyclic olefins other than cyclooctene include cyclopropene, cyclobutene, cyclopentene, methylcyclopentene, cyclohexene, methylcyclohexene, cycloheptene, and the like. Examples of the monocyclic dienes include 1,5-cyclooctadiene. Examples of the monocyclic trienes include 1,5,9-cyclododecatriene. In the ring-opened copolymer according to the present invention, the proportion of structural units derived from the additional monomers relative to the total repeating structural units is preferably 30% by weight or less, more preferably 15% by weight or less, particularly preferably substantially 0% by weight.

In the ring-opened copolymer according to the present invention, the proportion of structural units derived from cyclopentene relative to the total repeating structural units is preferably 5% by weight or less, more preferably 1% by weight or less, particularly preferably substantially 0%.

The weight average molecular weight (Mw) of the ring-opened copolymer according to the present invention is preferably 10,000 to 1,000,000, more preferably 50,000 to 800,0000, still more preferably 80,000 to 600,000 as measured against polystyrene standards by gel permeation chromatography. When the weight average molecular weight (Mw) is within the above ranges, the ring-opened copolymer can have sufficient rubber properties and also can be easy to produce and handle. The ratio (Mw/Mn) between the weight average molecular weight (Mw) and the number average molecular weight (Mn) of the ring-opened copolymer according to the present invention measured against polystyrene standards by gel permeation chromatography is preferably 1.0 to 5.0, more preferably 1.5 to 2.5.

The ring-opened copolymer according to the present invention has a cis/trans ratio of 90/10 to 5/95, more preferably 70/30 to 10/90, still more preferably 50/50 to 15/85 because the effect of the present invention can be more prominent. The cis/trans ratio refers to the ratio of the cis double bond content to the trans double bond content (cis content/trans content) in the repeating units contained in the ring-opened copolymer according to the present invention.

The ring-opened copolymer according to the present invention has a glass transition temperature (Tg) of preferably -100 to 20°C, more preferably -90 to -0°C, still more preferably -80 to -20°C because the effect of the present invention can be more prominent. The glass transition temperature of the ring-opened copolymer can be controlled by selecting the type and the amount of the norbornene compound with three or more rings used, for example.

The ring-opened copolymer according to the present invention may have a modifying group at polymer chain ends. Although not particularly limited, the modifying groups introduced to polymer chain ends are preferably modifying groups containing an atom selected from the group consisting of atoms of the Group 15 elements in the periodic table, atoms of the Group 16 elements in the periodic table, and a silicon atom.

Preferred modifying groups for forming the terminal modifying groups are modifying groups containing an atom selected from the group consisting of a nitrogen atom, an oxygen atom, a phosphorus atom, a sulfur atom, and a silicon atom because such groups can enhance the compatibility with a filler such as silica and such enhanced compatibility enables production of a cross-linked rubber having much better breaking strength and abrasion resistance. Among these, modifying groups containing an atom selected from the group consisting of a nitrogen atom, an oxygen atom, and a silicon atom are more preferred.

Examples of modifying groups containing a nitrogen atom include amino, pyridyl, imino, amido, nitro, and urethane bond groups, and hydrocarbon groups containing one of these groups. Examples of modifying groups containing an oxygen atom include hydroxyl, carboxylic acid, ether, ester, carbonyl, aldehyde, and epoxy groups, and hydrocarbon groups containing one of these groups. Examples of modifying groups containing a silicon atom include alkylsilyl and oxysilyl groups, and hydrocarbon groups containing one of these groups. Examples of modifying groups containing a phosphorus atom include phosphoric acid and phosphino groups, and hydrocarbon groups containing one of these groups. Examples of modifying groups containing a sulfur atom include sulfonyl, thiol, and thioether groups, and hydrocarbon groups containing one of these groups. Alternatively, modifying groups containing two or more of the above groups may be used. The "oxysilyl group" refers to a group containing a silicon-oxygen bond.

Specific examples of the oxysilyl groups include alkoxysilyl, aryloxysilyl, acyloxy, alkylsiloxysilyl, and arylsiloxysilyl groups, and the like. Other examples thereof include hydroxylsilyl groups resulting from hydrolysis of alkoxysilyl, aryloxysilyl, and acyloxy groups.

The "alkoxysilyl group" refers to a group containing at least one alkoxy group linked to a silicon atom. Specific examples thereof include trimethoxysilyl, (dimethoxy) (methyl)silyl, (methoxy) (dimethyl)silyl, (methoxy) (dichloro)silyl, triethoxysilyl, (diethoxy) (methyl)silyl, (ethoxy) (dimethyl)silyl, (dimethoxy) (ethoxy)silyl, (methoxy) (diethoxy)silyl, tripropoxysilyl, and tris(trimethylsiloxy)silyl groups, and the like.

When the degree of introduction of a modifying group to polymer chain ends of the ring-opened copolymer according to the present invention is expressed as a percentage of the number of ring-opened copolymer chain ends to which the modifying group is introduced relative to the total number of ring-opened copolymer chain ends, the degree of introduction of the modifying group to polymer chain ends of the ring-opened copolymer according to the present invention can be 10% or more, although not particularly limited thereto.

The ring-opened copolymer according to the present invention has a Mooney viscosity (ML1+4, 100°C) of preferably 20 to 150, more preferably 30 to 130, still more preferably 40 to 110. By controlling the Mooney viscosity within the above ranges, easier kneading at ordinary and high temperatures can be ensured, thereby ensuring better workability.

### <Method for producing ring-opened copolymer>

The ring-opened copolymer according to the present invention can be produced by any method. Examples of such methods include, but are not limited to, copolymerization of cyclooctene and the norbornene compound with three or more rings in the presence of a ring-opening polymerization catalyst.

The ring-opening polymerization catalyst may be any catalyst that can catalyze ring-opening copolymerization of cyclooctene and the norbornene compound with three or more rings. Among others, preferred are a ruthenium-carbene complex and a so-called Ziegler-Natta catalyst. The ring-opening polymerization catalysts may be used alone or in combination.

Specific examples of the ruthenium-carbene complex include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine) ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene) (tricyclohexylphosphine)benzylidene ruthenium dichloride, (1,3-dimesitylimidazolidin-2-ylidene) (tricyclohexylphosphine)benzylidene ruthenium dichloride (also called dichloro[1,3-bis(2,4,6-trimethylphenyl)-2-imidazolidinylidene](benzylidene)(tricyclohexylphosphine)ruthenium(II)), bis(tricyclohexylphosphine)ethoxymethylidene ruthenium dichloride, (1,3-dimesitylimidazolidin-2-ylidene) (tricyclohexylphosphine)ethoxymethylidene ruthenium dichloride, and the like.

A Ziegler-Natta catalyst is a mixed catalyst of a compound with a transition metal of Group 6 of the periodic table and an organoaluminium compound. Specific examples of compounds with a transition metal of Group 6 of the periodic table include molybdenum compounds such as molybdenum pentachloride, molybdenum oxotetrachloride, molybdenum(phenylimide) tetrachloride, tridodecylammonium molybdate, methyltrioctylammonium molybdate, tridecylammonium molybdate, trioctylammonium molybdate, and tetraphenylammonium molybdate; tungsten compounds such as tungsten hexachloride, tungsten oxotetrachloride, tungsten(phenylimide) tetrachloride, monocatecholate tungsten tetrachloride, bis(3,5-di-tert-butyl)catecholate tungsten dichloride, bis(2-chloroetherate) tetrachloride, and tungsten oxotetraphenolate; and the like.

Specific examples of organoaluminium compounds contained in a Ziegler-Natta catalyst include diethylaluminium ethoxide, diethylaluminium isopropoxide, diisobutylaluminium butoxide, diisobutylaluminium hexoxide, diethylaluminium(2-trichloroethoxide), diethylaluminium(2-tribromoethoxide), diethylaluminium(1,3-dichloro-2-propoxide), diethylaluminium(1,1,1,3,3,3-hexafluoro-2-propoxide), diethylaluminium(1,1,1-trichloro-2-methyl-2-propoxide), diethylaluminium(2,6-diisopropylphenoxide), ethylaluminium di(2-trichloroethoxide), ethylaluminium di(2-tribromoethoxide), ethylaluminium di(1,3-dichloro-2-propoxide), ethylaluminium di(1,1,1,3,3,3-hexafluoro-2-propoxide), ethylaluminium di(1,1,1-trichloro-2-methyl-2-propoxide), ethylaluminium bis(2,6-diisopropylphenoxide), ethyl(chloro)aluminium ethoxide, ethyl(chloro)aluminium isopropoxide, ethyl(chloro)aluminium butoxide, ethyl(chloro)aluminium(2-trichloroethoxide), ethyl(chloro)aluminium(2-tribromoethoxide), ethyl(bromo)aluminium(1,3-dichloro-2-propoxide), ethyl(chloro)aluminium(1,1,1,3,3,3-hexafluoro-2-propoxide), ethyl(chloro)aluminium(1,1,1-trichloro-2-methyl-2-propoxide), ethyl(chloro)aluminium(2,6-diisopropylphenoxide), and the like.

The amount of the ring-opening polymerization catalyst to be used is expressed as a molar ratio (ring-opening polymerization catalyst:monomers used in copolymerization), and is in the range of typically 1:500 to 1:2,000,000, preferably 1:700 to 1:1,500,000, more preferably 1:1,000 to 1:1,000,000.

The polymerization reaction may be performed in the absence of a solvent or in a solution. In the case of copolymerization in a solution, the solvent used may be any solvent as long as it is inert during the polymerization reaction and can dissolve compounds such as cyclooctadiene and norbornene compounds, and polymerization catalysts used in the copolymerization. Preferred are hydrocarbon-based solvents and halogen-containing solvents. Specific examples of the hydrocarbon-based solvents include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Specific examples of the halogen-containing solvents include alkyl halides such as dichloromethane and chloroform; aromatic halogens such as chlorobenzene and dichlorobenzene; and the like. These solvents may be used alone or in combination.

In the process of ring-opening polymerization of cyclooctene and the norbornene compound with three or more rings, in order to adjust the molecular weight of the resulting ring-opened copolymer, an olefin compound or a diolefin compound may be optionally added as a molecular weight modifier to the polymerization system.

The olefin compound may be any organic compound having an ethylenically unsaturated bond. Examples thereof include, but are not limited to, α-olefins such as 1-butene, 1-pentene, 1-hexene, and 1-octene; styrene compounds such as styrene and vinyltoluene; halogen-containing vinyl compounds such as acryl chloride; vinyl ethers such as ethyl vinyl ether and i-butyl vinyl ether; amine-containing vinyl compounds such as allylamine, N,N-dimethylallylamine, and N,N-diethylallylamine; disubstituted olefins such as 2-butene and 3-hexene; and the like.

Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound or the diolefin compound used as the molecular weight modifier can be appropriately selected according to the molecular weight of the resulting ring-opened copolymer, and the amount thereof expressed as a molar ratio to the monomers used in copolymerization is typically 1/100 to 1/100,000, preferably 1/200 to 1/50,000, more preferably 1/500 to 1/10,000.

In the case where the ring-opened copolymer according to the present invention is prepared as a copolymer having modifying groups at polymer chain ends, a modifying group-containing olefinically unsaturated hydrocarbon compound is preferably used as a molecular weight modifier instead of the olefin compound and the diolefin compound. In the presence of such a modifying group-containing olefinically unsaturated hydrocarbon compound, the copolymerization can result in a ring-opened copolymer in which the modifying group is suitably introduced to polymer chain ends.

The modifying group-containing olefinically unsaturated hydrocarbon compound may be any compound having the modifying group and one metathesis polymerizable olefinic carbon-carbon double bond, although not particularly limited thereto. For example, in order to introduce oxysilyl groups to polymer chain ends of the ring-opened copolymer, an oxysilyl group-containing olefinically unsaturated hydrocarbon is added to the polymerization reaction system.

As examples of such oxysilyl group-containing olefinically unsaturated hydrocarbons, the following compounds can be mentioned. Hydrocarbons for introducing the modifying group to only one end (single end) of the polymer chains of the monocyclic olefin ring-opening polymer include alkoxysilane compounds such as vinyl(trimethoxy)silane, vinyl(triethoxy)silane, allyl(trimethoxy)silane, allyl (methoxy) (dimethyl)silane, allyl(triethoxy)silane, allyl(ethoxy) (dimethyl)silane, styryl(trimethoxy)silane, styryl(triethoxy)silane, styrylethyl(triethoxy)silane, allyl (triethoxysilylmethyl) ether, and allyl(triethoxysilylmethyl) (ethyl)amine; aryloxysilane compounds such as vinyl (triphenoxy) silane, allyl(triphenoxy)silane, and allyl(phenoxy) (dimethyl)silane; acyloxysilane compounds such as vinyl(triacetoxy)silane, allyl(triacetoxy)silane, allyl(diacetoxy)methylsilane, and allyl(acetoxy) (dimethyl)silane; alkylsiloxysilane compounds such as allyltris(trimethylsiloxy)silane; arylsiloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like.

Hydrocarbons for introducing the modifying group to both polymer chain ends (both ends) of the monocyclic olefin ring-opening polymer include alkoxysilane compounds such as bis(trimethoxysilyl)ethylene, bis(triethoxysilyl)ethylene, 1,4-bis(trimethoxysilyl)-2-butene, 1,4-bis(triethoxysilyl)-2-butene, and 1,4-bis(trimethoxysilylmethoxy)-2-butene; aryloxysilane compounds such as 1,4-bis(triphenoxysilyl)-2-butene; acyloxysilane compounds such as 1,4-bis(triacetoxysilyl)-2-butene; alkylsiloxysilane compounds such as 1,4-bis[tris(trimethylsiloxy)silyl]-2-butene; arylsiloxysilane compounds such as 1,4-bis[tris(triphenylsiloxy)silyl]-2-butene; polysiloxane compounds such as 1,4-bis(heptamethyltrisiloxy)-2-butene, and 1,4-bis(undecamethylcyclohexasiloxy)-2-butene; and the like.

The modifying group-containing olefinically unsaturated hydrocarbon compounds such as oxysilyl group-containing olefinically unsaturated hydrocarbons not only act to introduce the modifying group to polymer chain ends of the ring-opened copolymer but also act as molecular weight modifiers. The amount of the modifying group-containing olefinically unsaturated hydrocarbon compound to be used can be appropriately selected according to the molecular weight of the resulting ring-opened copolymer, and the amount thereof expressed as a molar ratio to the monomers used in copolymerization is in the range of typically 1/100 to 1/100,000, preferably 1/200 to 1/50,000, more preferably 1/500 to 1/10,000.

The polymerization temperature is preferably -100°C or higher, more preferably -50°C or higher, still more preferably 0°C or higher, particularly preferably 20°C or higher, although not particularly limited thereto. The upper limit of the polymerization temperature is preferably lower than 100°C, more preferably lower than 90°C, still more preferably lower than 80°C, particularly preferably 70°C or lower, although not particularly limited thereto. Although the polymerization reaction time is also not particularly limited, it is preferably 1 minute to 72 hours, more preferably 10 minutes to 20 hours.

To the ring-opened copolymer obtained by the polymerization reaction, an antioxidant such as a phenol-based stabilizer, a phosphorus-based stabilizer, or a sulfur-based stabilizer may be optionally added. The amount of the antioxidant to be added can be determined according to factors such as the type thereof. Additionally, an extender oil may also be added if needed. In the case where the ring-opened copolymer is prepared as a polymer solution, any known recovery method can be used to recover the ring-opened copolymer from the polymer solution. Examples of such methods include a method involving removing the solvent by steam stripping or the like, filtering out the solid, and drying the solid to afford the ring-opened copolymer as a solid; a method involving directly devolatilizing the solvent and the like by a twin-screw heating dryer or the like to afford the ring-opened copolymer as a solid; a method involving removing the solvent by reprecipitation with a poor solvent, filtering out the solid, and drying the solid to afford the ring-opened copolymer as a solid; and the like.

### <Rubber composition>

The rubber composition according to the present invention comprises the above-described ring-opened copolymer according to the present invention. The rubber composition according to the present invention may comprise necessary amounts of compounding agents such as a filler, a cross-linking agent, a cross-linking accelerator, a cross-linking activator, an antioxidant, an activator, a process oil, a plasticizer, a lubricant, and the like in addition to the above-described ring-opened copolymer according to the present invention.

Examples of the filler include carbon black, silica, calcium carbonate, talc, clay, and the like.

Examples of the carbon black include furnace black, acetylene black, thermal black, channel black, graphite, and the like. Among these, furnace black is preferable, and specific examples thereof include SAF, ISAF, ISAF-HS, ISAF-LS, IISAF-HS, HAF, HAF-HS, HAF-LS, FEF, and the like. These carbon blacks may be used alone or in combination.

The nitrogen adsorption specific surface area (N₂SA) of the carbon black is preferably from 5 to 200 m²/g, more preferably from 70 to 120 m²/g, and the dibutyl phthalate (DBP) adsorption amount is preferably from 5 to 300 ml/100g, more preferably from 80 to 160 ml/100g.

Examples of silica include, but are not limited to, dry process white carbon, wet process white carbon, colloidal silica, precipitated silica, and the like. Further, a carbon-silica dual phase filler comprising carbon black and silica supported on the surface thereof may be used. Preferred among these is wet process white carbon mainly composed of hydrous silicic acid. These may be used alone or in combination.

The nitrogen adsorption specific surface area of the silica (measured by the BET method in accordance with ASTM D3037-81) is preferably 50 to 400 m²/g, more preferably 100 to 220 m²/g. The pH of the silica is preferably less than 7, more preferably 5 to 6.9. Silica having a pH within these ranges has a particularly preferable level of compatibility with the ring-opened copolymer.

When silica is added to the rubber composition according to the present invention, a silane coupling agent is preferably further mixed to further enhance the compatibility between the ring-opening copolymer and the silica. Examples of the silane coupling agent include vinyltriethoxysilane, β-(3,4-epoxycyclohexyl)ethyltrimethoxysilane, N-(β-aminoethyl)-γ-aminopropyltrimethoxysilane, bis(3-(triethoxysilyl)propyl)tetrasulfide, and bis(3-(triethoxysilyl)propyl)disulfide; and tetrasulfides described in JP H06-248116 A, such as γ-trimethoxysilylpropyldimethylthiocarbamyl tetrasulfide and γ-trimethoxysilylpropylbenzothiazyl tetrasulfide. Among these, the tetrasulfides are preferred. These silane coupling agents may be used alone or in combination. The amount of the silane coupling agent to be added is preferably 0.1 to 30 parts by weight, more preferably 1 to 15 parts by weight relative to 100 parts by weight of the silica.

The content of the filler in the rubber composition according to the present invention is preferably 1 to 150 parts by weight, more preferably 10 to 120 parts by weight, still more preferably 15 to 100 parts by weight, particularly preferably 20 to 80 parts by weight relative to 100 parts by weight of the rubber components in the rubber composition because the effect of the present invention can be more prominent.

Examples of the cross-linking agent include sulfurs such as powdered sulfur, precipitated sulfur, colloidal sulfur, insoluble sulfur, and highly dispersible sulfur; halogenated sulfurs such as sulfur monochloride and sulfur dichloride; organic peroxides such as dicumyl peroxide and di-tert-butyl peroxide; quinone dioximes such as p-quinone dioxime and p,p'-dibenzoylquinone dioxime; organic polyamine compounds such as triethylenetetramine, hexamethylenediamine carbamate, and 4,4'-methylene bis-o-chloroaniline; alkylphenol resins having a methylol group; and the like. Among these, sulfurs are preferred, and powdered sulfur is more preferred. These cross-linking agents are used alone or in combination. The amount of the cross-linking agent to be added is preferably 0.1 to 15 parts by weight, more preferably 0.5 to 5 parts by weight relative to 100 parts by weight of rubber components in the rubber composition.

Examples of the cross-linking accelerator include sulfenamide-based cross-linking accelerators such as N-cyclohexyl-2-benzothiazolylsulfenamide, N-(tert-butyl)-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-di-ortho-tolylguanidine, and 1-ortho-tolylbiguanidine; thiourea-based cross-linking accelerators such as diethylthiourea; thiazole-based cross-linking accelerators such as 2-mercaptobenzothiazole, dibenzothiazyl disulfide, and zinc 2-mercaptobenzothiazole; thiuram-based cross-linking accelerators such as tetramethylthiuram monosulfide and tetramethylthiuram disulfide; dithiocarbamic acid-based cross-linking accelerators such as sodium dimethyldithiocarbamate and zinc diethyldithiocarbamate; xanthogenic acid-based cross-linking accelerators such as sodium isopropyl xanthate, zinc isopropyl xanthate, and zinc butyl xanthate; and the like. Among these, those containing sulfenamide-based cross-linking accelerators are preferred, and those containing N-(tert-butyl)-2-benzothiazolylsulfenamide are particularly preferred. These cross-linking accelerators are used alone or in combination. The amount of the cross-linking accelerator to be added is preferably 0.1 to 15 parts by weight, more preferably 0.5 to 5 parts by weight relative to 100 parts by weight of the rubber components in the rubber composition.

As the cross-linking activator, a higher fatty acid such as stearic acid, zinc oxide, or the like can be used. The amount of the cross-linking activator to be added can be appropriately selected. In the case where a higher fatty acid is added, the amount thereof is preferably 0.05 to 15 parts by weight, more preferably 0.5 to 5 parts by weight relative to 100 parts by weight of the rubber components in the rubber composition. In the case where zinc oxide is added, the amount thereof is preferably 0.05 to 10 parts by weight, more preferably 0.5 to 3 parts by weight relative to 100 parts by weight of the rubber components in the rubber composition.

As the process oil, a mineral oil or a synthetic oil may be used. As the mineral oil, an aroma oil, a naphthenic oil, a paraffin oil, or the like is typically used. Examples of other compounding agents include activators such as diethylene glycol, polyethylene glycol, and silicone oil; tackifiers such as a petroleum resin and coumarone resin; waxes; and the like.

Further, the rubber composition according to the present invention may further contain rubbers other than the above-described ring-opening copolymer according to the present invention as rubber components. Examples of such rubbers other than the ring-opening copolymer according to the present invention include natural rubber (NR), polyisoprene rubber (IR), emulsion polymerized SBR (styrenebutadiene copolymer rubber), solution polymerized random SBR (bound styrene: 5 to 50% by weight, 1,2-bond content in butadiene units: 10 to 80%), high trans SBR (trans bond content in butadiene units: 70 to 95%), low cis BR (polybutadiene rubber), high cis BR, high trans BR (trans bond content in butadiene units: 70 to 95%), ethylene-propylene-diene rubber (EPDM), styrene-isoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicon rubber, ethylene-propylene rubber, urethane rubber, and the like. Among these, NR, BR, IR, EPDM, and SBR are preferred, and solution polymerized random SBR is particularly preferred. These rubbers can be used alone or in combination.

The content of the ring-opened copolymer in the rubber composition according to the present invention is preferably 50% by weight or more, more preferably 60% by weight or more, still more preferably 70% by weight or more relative to the total rubber components because the effect of the present invention can be more prominent.

The rubber composition according to the present invention can be obtained by kneading the components by an ordinary method. For example, the rubber composition can be obtained by kneading the compounding agents other than the cross-linking agent and the cross-linking accelerator with the rubber components including the ring-opening copolymer, and then by mixing the cross-linking agent and the cross-linking accelerator with the kneaded product. The kneading temperature of the compounding agents other than the cross-linking agent and the cross-linking accelerator with the rubber components including the ring-opening copolymer is preferably 20 to 200°C, more preferably 30 to 180°C, and the kneading time is preferably 30 seconds to 30 minutes. The cross-linking agent and the cross-linking accelerator are added after cooling the kneaded product to typically 100°C or lower, preferably to 80°C or lower.

### <Cross-linked rubber>

The cross-linked rubber according to the present invention is obtained by cross-linking the above-described rubber composition according to the present invention.

The cross-linked rubber according to the present invention can be produced using the rubber composition according to the present invention, for example, by molding with a molding machine enabling molding into a desired shape, such as an extruding machine, an injection molding machine, a compressor, or a roll, performing a cross-linking reaction by heating, and fixing the shape as a cross-linked rubber. In this case, the cross-linking may be performed after performing molding beforehand, or simultaneously with the molding. The molding temperature is typically 10 to 200°C, preferably 25 to 120°C. The cross-linking temperature is typically 100 to 200°C, preferably 130 to 190°C. The cross-linking time is typically 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. To avoid this, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention thus obtained is a product obtained by using the above-described ring-opened copolymer according to the present invention described above, and thus has a good balance of excellent mechanical strength, excellent wet grip properties, and low heat build-up. By virtue of these properties, the cross-linked rubber according to the present invention can be used in various applications, such as materials for various tire parts such as cap treads, base treads, carcasses, sidewalls, and beads in tires; materials for various industrial products such as hoses, belts, mats, antivibration rubber, and others; rebound resilience improvers for resins; resin film cushioning materials; shoe soles; rubber shoes; golf balls; toys; and the like. In particular, the cross-linked rubber according to the present invention can be suitably used in tire parts such as treads, carcasses, sidewalls, and beads in various tires such as all-season tires, high-performance tires, and studless tires.

### EXAMPLES

The present invention is hereinafter illustrated in greater detail with reference to Examples. However, the present invention should not be construed as limited to these examples. In the following examples, the term "part(s)" is on a weight basis unless otherwise indicated. Tests and evaluations were performed according to the following methods.

### <Molecular weight>

The number average molecular weight (Mn), the weight average molecular weight (Mw), and the molecular weight distribution (Mw/Mn) of each polymer were determined as values measured against polystyrene standards by gel permeation chromatography (GPC) using tetrahydrofuran as a solvent. As a measuring device, HLC-8320GPC (available from Tosoh Corporation) was used. Using four TSKgel SuperMultipore HZ-H (available from Tosoh Corporation) columns connected in series, the measurement was performed at a flow rate of 0.35 ml/min, a sample injection amount of 10 µl, and a column temperature of 40°C.

### <Proportions of constituent monomers>

The proportions of the constituent monomers in each polymer were determined by ¹H-NMR spectrometry. Specifically, ¹H-NMR spectrometry was performed using deuterated chloroform as a solvent, and the proportions were determined based on the integration ratio between a double bond signal at 5.0 to 5.5 ppm and a signal derived from the norbornene compound at 2.3 to 3.0 ppm.

### <Cis/trans ratio of double bonds in main chain>

The cis/trans ratio of double bonds in the main chain of each polymer was determined by ¹³C-NMR spectrometry.

### <Glass transition temperature (Tg)>

The glass transition temperature of each polymer was measured with a differential scanning calorimeter (DSC) at a temperature increase rate of 10°C/min.

### <Mechanical strength>

The rubber composition was cross-linked by pressing at 160°C for 20 minutes to prepare a sheet-shaped cross-linked rubber, which was punched out in the direction parallel to the grain direction to prepare a dumbbell-shaped test piece in the shape of dumbbell No. 6 defined in JIS K6251:2010. The tensile strength and elongation of the dumbbell-shaped test piece were measured by a tensile test using a tensile tester (product name "TENSOMETER 10K", available from ALPHA TECHNOLOGIES) at 23°C at 500 mm/min in accordance with JIS K 6251:2010. An index was calculated from the measurement result based on the measured value of the sample in Comparative Example 1, which was regarded as 100. A greater index indicates higher mechanical strength. When this index is 101 or greater, the mechanical strength can be considered to be excellent.

### <Wet grip properties>

The rubber composition was cross-linked by pressing at 160°C for 20 minutes to prepare a test piece, and the tanδ at 0°C of the resulting test piece was measured using ARES available from Rheometrics at a dynamic strain of 0.5% and a frequency of 10 Hz. An index was calculated from the measurement result based on the measured value of the sample in Comparative Example 1, which was regarded as 100. A greater index indicates better wet grip properties. When this index is 90 or greater, the wet grip properties can be considered to be sufficient.

### <Heat build-up>

The rubber composition was cross-linked by pressing at 160°C for 20 minutes to prepare a test piece, and the tanδ at 60°C of the resulting test piece was measured using ARES available from Rheometrics at a dynamic strain of 2.0% and a frequency of 10 Hz. An index was calculated from the measurement result based on the measured value of the sample in Comparative Example 1, which was regarded as 100. A greater index indicates lower heat build-up. When this index is 101 or greater, the heat build-up can be considered to be excellent.

### <Abrasion resistance>

The rubber composition was press-formed at 160°C for 20 minutes using a mold under pressure to obtain a cylindrical cross-linked rubber for high resilience materials having a diameter of 16 mm and a thickness of 6 mm. A specific wear volume of the resulting cylindrical cross-linked rubber for high resilience materials was measured using a DIN wear tester (product name "AB-6110", available from Ueshima Seisakusho Co., Ltd.) in accordance with JIS K6264-2:2005 under the conditions where the test method was the method A, the additional force was 10 N, the wear distance was 40 m, the temperature was 23°C, and the reference test piece D1 was used. An index was calculated from the measurement result based on the measured value of the sample in Comparative Example 1, which was regarded as 100. A greater index indicates higher abrasion resistance. When this index is 90 or greater, the abrasion resistance can be considered to be sufficient.

### <<Example 1>>

Under a nitrogen atmosphere, 120 parts of cyclooctene (COE), 80 parts of dicyclopentadiene (DCPD) as a norbornene compound with three or more rings, 1194 parts of cyclohexane, and 0.20 parts of 1-hexene were placed in a glass reactor equipped with a stirrer. Subsequently, 0.028 parts of a ring-opening polymerization catalyst (dichloro[1,3-bis(2,4,6-trimethylphenyl)-2-imidazolidinylidene] (benzylidene) (tricyclohexylphosphine) ruthenium (II)) dissolved in 10 parts of toluene was added thereto to cause a polymerization reaction, and the reaction was allowed to proceed for 4 hours at room temperature. After the polymerization reaction, an excess of vinyl ethyl ether was added to terminate the polymerization reaction.

The polymer solution was poured into a large excess of methanol containing 2,6-di-t-butyl-p-cresol (BHT) to precipitate the polymer, and the precipitated polymer was collected, washed with methanol, vacuum dried at 50°C for 3 days to afford 200 parts of a COE/DCPD ring-opened copolymer. The resulting COE/DCPD ring-opened copolymer had a weight average molecular weight (Mw) of 248,000, contained 60% by weight of a structural unit derived from cyclooctene and 40% by weight of a structural unit derived from a norbornene compound with three or more rings (DCPD), and had a trans bond content of 64% (i.e., cis/trans ratio = 36%/64%) and a glass transition temperature (Tg) of -45°C.

100 Parts of the COE/DCPD ring-opened copolymer prepared above was masticated using a 250-ml Banbury mixer. Next, 50 parts of carbon black (product name: "Seast 9H", available from TOKAI CARBON CO., LTD.), 3 parts of zinc oxide (zinc flower No. 1), 2.0 parts of stearic acid (product name: "SA-300", available from ADEKA CORPORATION), and 2.0 parts of N-phenyl-N'-(1,3-dimethylbutyl)-p-phenylenediamine (product name: "Nocrac 6C", available from Ouchi Shinko Chemical Industrial Co., LTD., an antioxidant) were added thereto. The resulting mixture was kneaded at a starting temperature of 80°C for 4 minutes, and the kneaded rubber composition was discharged from the Banbury mixer. When the kneading was completed, the temperature of the rubber composition was 160°C. Next, the resulting rubber composition, 1.75 parts of sulfur, and 1 part of N-cyclohexylbenzothiazole-2-sulfen (product name: "Nocceler CZ-G (CZ)", available from Ouchi Shinko Chemical Industrial Co., LTD., a cross-linking accelerator) were kneaded using an open roll mixer at 50°C, and then a sheet-like rubber composition was prepared. The obtained rubber composition was evaluated for mechanical strength, wet grip properties, heat build-up, and abrasion resistance according to the methods describe above. The results are shown in Table 1. The evaluated properties were expressed as indices relative to those of the test piece of Comparative Example 1 as a reference sample (each index: 100).

### <<Example 2>>

In Example 2, tetracyclo[6.2.1.1^{3,6}.0^{2,7}]dodec-4-ene (TCD) was used as a norbornene compound with three or more rings. A COE/TCD ring-opened copolymer was prepared in the same manner as in Example 1 except that the compounds used for the polymerization were varied as shown in Table 1. The physical properties of the resulting COE/TCD ring-opened copolymer were as shown in Table 1. Then, a rubber composition was prepared in the same manner as in Example 1 except that the COE/TCD ring-opened copolymer prepared above was used. The resulting rubber composition was evaluated as in Example 1. The results are shown in Table 1.

### <<Example 3>>

In Example 3, 1,4-methano-1,4,4a,9a-tetrahydro-9H-fluorene (MTHF) was used as a norbornene compound with three or more rings. A COE/MTHF ring-opened copolymer was prepared in the same manner as in Example 1 except that the compounds used for the polymerization were varied as shown in Table 1. The physical properties of the resulting COE/MTHF ring-opened copolymer were as shown in Table 1. Then, a rubber composition was prepared in the same manner as in Example 1 except that the COE/MTHF ring-opened copolymer prepared above was used. The resulting rubber composition was evaluated as in Example 1. The results are shown in Table 1.

### <<Examples 4 to 6>>

COE/DCPD ring-opened copolymers were prepared in the same manner as in Example 1 except that the compounds used for the polymerization were varied as shown in Table 1. The physical properties of the resulting COE/DCPD ring-opened copolymers were as shown in Table 1. Then, rubber compositions were prepared in the same manner as in Example 1 except that the COE/DCPD ring-opened copolymers prepared above was used. The resulting rubber compositions were evaluated as in Example 1. The results are shown in Table 1.

### <<Comparative Example 1>>

In Comparative Example 1, cyclopentene (CPE) was used instead of cyclooctene (COE). A CPE/DCPD ring-opened copolymer was prepared in the same manner as in Example 1 except that the compounds used for the polymerization were varied as shown in Table 1. The physical properties of the resulting CPE/DCPD ring-opened copolymer were as shown in Table 1. Then, a rubber composition was prepared in the same manner as in Example 1 except that the CPE/DCPD ring-opened copolymer prepared above was used. The resulting rubber composition was evaluated as in Example 1. The results are shown in Table 1.

### <<Comparative Example 2>>

In Comparative Example 2, 2-norbornene (NB) was used instead of a norbornene compound with three or more rings. A COE/NB ring-opened copolymer was prepared in the same manner as in Example 1 except that the compounds used for the polymerization were varied as shown in Table 1. The physical properties of the resulting COE/NB ring-opened copolymer were as shown in Table 1. Then, a rubber composition was prepared in the same manner as in Example 1 except that the COE/NB ring-opened copolymer prepared above was used. The resulting rubber composition was evaluated as in Example 1. The results are shown in Table 1.

### <<Comparative Example 3>>

In Comparative Example 3, cyclooctene (COE) was used alone as a monomer. A COE ring-opened polymer was prepared in the same manner as in Example 1 except that the compounds used for the polymerization were varied as shown in Table 1. The physical properties of the resulting COE ring-opened polymer were as shown in Table 1. Then, a rubber composition was prepared in the same manner as in Example 1 except that the COE ring-opened polymer prepared above was used. The resulting rubber composition was evaluated as in Example 1. The results are shown in Table 1.

### [Table 1]

**Table 1**

| | | | Example 1 | Example 2 | Example 3 | Example 4 | Example 5 | Example 6 | Comp. Ex. 1 | Comp. Ex. 2 | Comp. Ex. 3 |
|---|---|---|---|---|---|---|---|---|---|---|---|
| Compounds used in polymerization | | | | | | | | | | | |
| | COE (cyclooctene) | (parts by weight) | 120 | 120 | 120 | 90 | 170 | 40 | | 120 | 200 |
| | CPE | (parts by weight) | | | | | | | 154 | | |
| | DCPD (norbornene compound with three or more rings) | (parts by weight) | 80 | | | 110 | 30 | 160 | 46 | | |
| | TCD (norbornene compound with three or more rings) | (parts by weight) | | 80 | | | | | | | |
| | MTHF (norbornene compound with three or more rings) | (parts by weight) | | | 80 | | | | | | |
| | NB | (parts by weight) | | | | | | | | 80 | |
| | Cyclohexane | (parts by weight) | 1194 | 1194 | 1194 | 1194 | 1194 | 1194 | 594 | 1194 | 1194 |
| | 1-Hexene | (parts by weight) | 0.2 | 0.15 | 0.2 | 0.19 | 0.14 | 0.19 | 0.37 | 0.22 | 0.21 |
| | Ring-opening polymerization catalyst | (parts by weight) | 0.028 | 0.026 | 0.026 | 0.028 | 0.030 | 0.027 | 0.043 | 0.031 | 0.031 |

| Physical properties of ring-opened copolymer | | | | | | | | | | | |
|---|---|---|---|---|---|---|---|---|---|---|---|
| | Proportion of cyclooctene unit | (% by weight) | 60 | 60 | 60 | 45 | 85 | 20 | | 60 | 100 |
| | Proportion of cyclopentene unit | (% by weight) | | | | | | | 60 | | |
| | Proportion of norbornene compound unit | (% by weight) | 40 | 40 | 40 | 55 | 15 | 80 | 40 | 40 | |
| | Weight average molecular weight | (×10³) | 248 | 274 | 239 | 250 | 288 | 247 | 253 | 250 | 263 |
| | Trans bond content | (%) | 64 | 63 | 63 | 63 | 64 | 61 | 83 | 64 | 65 |
| | Glass transition temperature (Tg) | (°C) | -45 | -46 | -41 | -20 | -85 | 18 | -43 | -63 | -112 |

| Evaluations | | | | | | | | | | | |
|---|---|---|---|---|---|---|---|---|---|---|---|
| | Mechanical strength | (index) | 115 | 112 | 109 | 105 | 101 | 108 | 100 | 89 | 69 |
| | Wet grip properties | (index) | 106 | 99 | 103 | 109 | 99 | 97 | 100 | 98 | 75 |
| | Heat build-up | (index) | 133 | 135 | 109 | 114 | 140 | 110 | 100 | 122 | 162 |
| | Abrasion resistance | (index) | 103 | 100 | 99 | 99 | 103 | 90 | 100 | 93 | 328 |

As shown in Table 1, the ring-opened copolymers each comprising a structural unit derived from cyclooctene and a structural unit derived from a norbornene compound with three or more rings gave cross-linked rubbers having a good balance of excellent mechanical strength, excellent wet grip properties, and low heat build-up (Examples 1 to 6).

In contrast, a ring-opened copolymer comprising a structural unit derived from cyclopentane instead of a structural unit derived from cyclooctene gave a cross-linked rubber having inferior heat build-up (Comparative Example 1).

On the other hand, a ring-opened copolymer comprising a structural unit derived from 2-norbornene instead of a structural unit derived from a norbornene compound with three or more rings gave a cross-linked rubber having inferior mechanical strength (Comparative Example 2).

On the other hand, a ring-opened copolymer that did not comprise a structural unit derived from a norbornene compound with three or more rings gave a cross-linked rubber having inferior mechanical strength and wet grip properties (Comparative Example 3).

## Claims

1. A ring-opened copolymer comprising a structural unit derived from cyclooctene and a structural unit derived from a norbornene compound with three or more rings.

2. The ring-opened copolymer according to claim 1, wherein relative to the total repeating structural units in the ring-opened copolymer, the proportion of the structural unit derived from cyclooctene is 10 to 95% by weight, and
the proportion of the structural unit derived from a norbornene compound with three or more rings is 5 to 90% by weight.

3. The ring-opened copolymer according to claim 1 or 2, wherein the norbornene compound with three or more rings is a norbornene compound having 3 to 6 ring structures.

4. The ring-opened copolymer according to claim 1 or 2, wherein the norbornene compound with three or more rings is at least one of a compound represented by General Formula (1) below and a compound represented by General Formula (2) below: 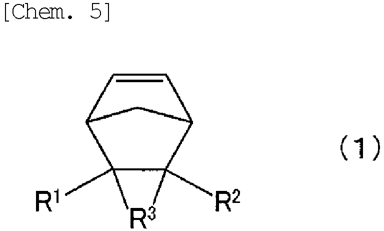 where in General Formula (1) above, R¹ and R² each independently represent a hydrogen atom, a halogen atom, an optionally substituted hydrocarbon group having 1 to 20 carbon atoms, or a substituent containing a silicon atom, an oxygen atom, or a nitrogen atom; R¹ and R² may be bonded to each other to form a ring; and R³ represents an optionally substituted divalent hydrocarbon group having 1 to 20 carbon atoms; 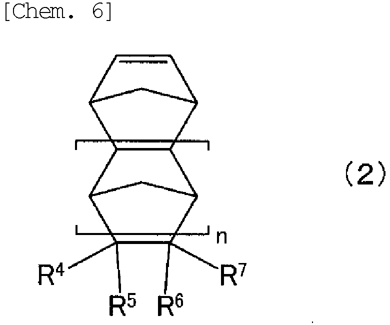 where in General Formula (2) above, R⁴ to R⁷ each independently represent a hydrogen atom, a halogen atom, an optionally substituted hydrocarbon group having 1 to 20 carbon atoms, or a substituent containing a silicon atom, an oxygen atom, or a nitrogen atom; R⁴ and R⁶ may be bonded to each other to form a ring, or at least one pair of R⁴ and R⁵, and R⁶ and R⁷ may be bonded to each other to form a ring; and n represents 1 or 2.

5. The ring-opened copolymer according to any one of claims 1 to 4, wherein the ring-opened copolymer has a weight average molecular weight (Mw) of 10,000 to 1,000,000, a cis/trans ratio of 90/10 to 5/95, and a glass transition temperature (Tg) of -100 to 20°C.

6. A rubber composition comprising the ring-opened copolymer according to any one of claims 1 to 5.

7. The rubber composition according to claim 6, further comprising a filler.

8. The rubber composition according to claim 6 or 7, further comprising a cross-linking agent.

9. A cross-linked rubber obtained by cross-linking the rubber composition according to any one of claims 6 to 8.

10. A tire comprising the cross-linked rubber according to claim 9.
